# EUROPEAN PATENT SPECIFICATION

(11) **EP 1 301 728 B1**
(45) Date of publication and mention of the grant of the patent: **21.12.2005**
(21) Application number: 00951828.3
(22) Date of filing: 14.07.2000
(51) Int. Cl.: F16D 65/12

(54) **A DISC FOR A DISC BRAKE**
SCHEIBE FÜR EINE SCHEIBENBREMSE
DISQUE POUR FREIN A DISQUE

(43) Date of publication of application: 16.04.2003
(73) Proprietor: Freni Brembo S.p.A., 24035 Curno (Bergamo) (IT)
(72) Inventor: OBERTI, Leone, I-24010 Lenna (Bergamo-IT) (IT)
(74) Representative: Crippa, Paolo Ernesto
(86) International application number: PCT/IT2000/000291
(87) International publication number: WO 2002/006694

(56) References cited:
- EP-A- 0 902 209
- EP-A- 0 985 841
- DE-A- 19 512 934

## Description

The subject of the present invention is a disc for a disc brake.

As is well known, a disc for a disc brake comprises a mounting bell for connection to a vehicle wheel hub and a braking band connected to the bell and having opposed braking surfaces for cooperating with pads of calipers in order to exert the braking action on the vehicle. It is also known to provide at least one channel on at least one of the braking surfaces.

An example of a disc of this type is known from DE-A-195 12 934.

Disc-brake discs of the type indicated above have been proposed in order to improve the behaviour of the brake in critical situations such as, for example, when water or moisture has accumulated on the braking surfaces whilst the vehicle is standing. In fact it is known that the channels enable the water or moisture which has accumulated on the braking band to be removed, preventing the interposition of water between the pads and the disc during the passage of the disc through the caliper. In other words, the water is drained away by the channels, permitting a better braking action.

For example, this requirement is currently satisfied by a brake disc having on its braking surface channels which have a curvature facing rearwardly with reference to the direction of rotation of the disc.

Although this known arrangement ensures that the water which has accumulated on the braking surface is drained away, it has many disadvantages. For example, when the channel passes beneath the pad, or rather meets the pad, it tends to produce a radially directed force on the pad, moving the pad away from its optimal working position. This stress is compensated by known resilient means provided in the caliper and urging the pad towards its optimal working position. Since the radial stress is produced each time a channel meets the pad, it generates a vibration of the disc brake and an annoying noise. Moreover, since these known discs have channels which have to be oriented relative to the direction of travel of the vehicle in order to operate in optimal manner, they require separate types of construction for mounting on the right-hand wheel hub units and for mounting on left-hand wheel hub units.

In order to solve the above-mentioned problems, disc brake discs having channels closed onto themselves and extending around the axis of the brake disc have also been proposed. This arrangement also has many disadvantages and, in particular, is not very efficient in draining the water away unless several intersecting channels are provided so as to cover the width of the braking band uniformly. However, this latter arrangement has the further disadvantage of causing a non-uniform scraping effect on the pad. In fact, in the areas of the braking surface in which the intersections of the channels occur, greater wear of the friction materials takes place, with a consequent alteration of the braking action and an excessive reduction in the life of the pads.

The problem upon which the present invention is based is that of proposing a disc for a disc brake which has structural and functional characteristics such as to satisfy the above-mentioned requirement and, at the same time, avoids the disadvantages complained of above.

This problem is solved by means of a disc for a disc brake comprising a mounting bell for connection to a vehicle wheel hub and a braking band connected to the bell and having opposed braking surfaces for cooperating with pads of calipers in order to exert the braking action on the vehicle, at least one of the braking surfaces having at least one pair of channels which are reflectively symmetrical with respect to a radius of the disc and which extend so as to cover the entire width of the baking band which is intended to cooperate with the pads, each channel extending without a break in continuity, characterized in that each channel of the at least one pair of channels extends along a path comprising at least one straight portion and at least one curved portion.

Further characteristics and the advantages of the disc brake disc according to the invention will become clear from the following description of some preferred embodiments thereof, given by way of non-limiting example with reference to the appended drawings, in which:
Figure 1 is a perspective view of a first embodiment of a disc for a disc brake,
Figure 2 is a side view of the disc of Figure 1,
Figure 2a shows a detail of the disc of Figure 2, sectioned on the line II-II,
Figure 2b shows a different embodiment of a detail of the disc of Figure 2, sectioned on the line II-II,
Figure 3 is a perspective view of a second embodiment of the disc,
Figure 4 is a side view of the disc of Figure 3,
Figure 5 is a side view of a third embodiment of the disc.

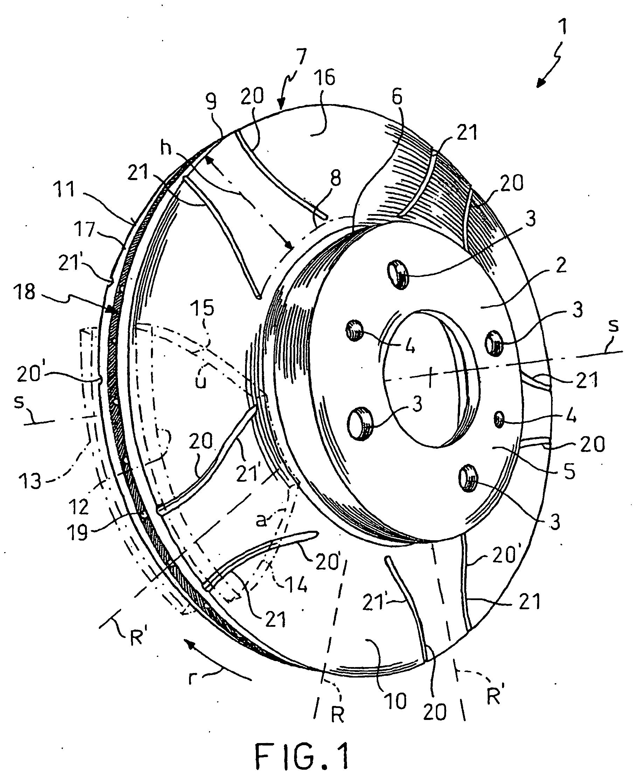

With reference to the drawings, a disc for a disc brake is generally indicated 1. The disc extends around an axis of symmetry, indicated "s" in Figure 1, which also constitutes the axis of rotation of the disc. The disc comprises a mounting bell 2 for connecting the disc to a vehicle hub, for example, by means of connection through-holes 3 and mounting holes 4 provided in a portion thereof having a bearing surface 5.

A braking band, generally indicated 7, is supported by the bell 2 by means of a connecting projection 6. The braking band 7 comprises an inner boundary or inner edge 8 disposed on the side of the disc which is nearest to the axis of symmetry "s", that is, the inner side of the disc, and an outer edge 9 disposed on the outer side or periphery of the disc. The braking band 7 is defined laterally by opposed braking surfaces 10 and 11, that is, an outer braking surface 10 and an inner braking surface 11, which extend for a predetermined width "h" between the inner edge 8 and the outer edge 9.

The braking surfaces can cooperate with opposed pads 12 and 13 of brake calipers, the overall shape of which is indicated in chain line in Figure 1, in order to exert a braking action on the vehicle. The pads 12 and 13 comprise plates for supporting friction material or linings which face the disc and can wear away during a braking action. Each pad has a first side edge, or attacking edge or leading edge 14 disposed in the region in which the disc enters the caliper during its rotation about the axis "s". Each pad also has a second side edge, leaving edge or trailing edge 15 which is disposed in the region in which the disc emerges from the caliper during its rotation. The leading edge 14 and the trailing edge 15 extend radially along predetermined paths indicated in Figure 1 by the chain lines "a" and "u".

The pads are housed in a caliper of known type arranged astride the disc 1 and having a body supported on a stub axle and housing thrust means for the pads, for generating a desired braking force in conventional manner.

In accordance with one embodiment, the disc 1 is self-ventilated. In this embodiment, the braking band 7 comprises an outer plate 16 and an inner plate 17 disposed facing one another so as to form an air-outlet space 18. The outer plate 16 is fixed to the inner plate 17 by means of spacers, for example, fins 19 shaped so as to define ventilation ducts.

At least one of the plates 16, 17 of the braking band 7 has at least one pair of channels or grooves 20 and 21 (or the pair of channels 20' and 21' may be considered). Each channel 20, 21 of the pair of channels is formed in the inner braking surface 10 and/or in the outer braking surface 11 of the disc 1. The channels of the pair of channels 20, 21 (20', 21') are reflectively symmetrical with respect to a radius R (or, for the pair of channels 20' and 21', the radius R') of the disc 1. The channels extend so as to cover the entire width "h" of the braking band 7 which is intended to cooperate with the pads 12, 13 and, owing to the presence of the pair of channels 20, 21, the braking surface of the braking band 7 is interrupted. Each channel 20, 21 of the at least one pair of channels extends without a break in continuity or, in other words, has continuous walls which define the groove, or, stated in yet another way, the channels do not intersect one another (Figure 1).

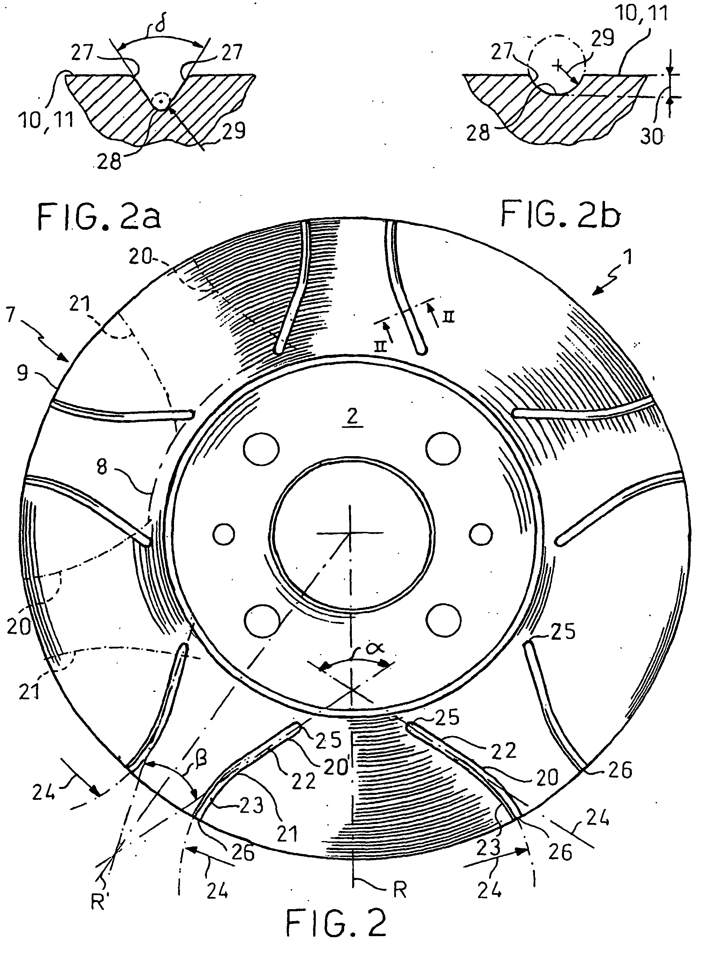

Each channel 20, 21 (20', 21') of the at least one pair of channels advantageously extends along a path which comprises at least one straight portion 22. Although each of the channels 20, 21 (20', 21') extends substantially radially relative to the disc 1, the at least one straight portion 22 is arranged obliquely relative to the radius R (R') of reflective symmetry of the pair of channels. For example, the straight portions 22 of the same pair of channels 20, 21 converge (in the case of the pair of channels 20' and 21' the straight portions 22 diverge). According to one embodiment, the straight portions of the channels 20, 21 of one pair subtend an angle α of between 80 and 130 degrees and, preferably, of between 100 and 120 degrees. The angle α between the straight portions is advantageously 112 degrees (whereas, with reference to the pair of channels indicated 20' and 21' in Figure 2, the angle β between the straight portions is preferably 68 degrees). These straight portions are preferably included in a first portion of the path of the groove, that is, the portion closest to the axis of the disc and in the inner portion of the braking band 7.

With further advantage, each of the channels 20, 21 (20', 21') of the at least one pair of channels also comprises at least one curved portion 23. According to one embodiment, the curved portion 23 is included in a second portion of the path of the channel which is joined to the first, straight portion 22 and is situated in the outer portion of the braking band 7 nearest to the outer edge 9 of the disc 1. The curved portion 23 arranges each channel 20, 21 substantially radially relative to the disc 1, particularly in its outermost portion so as to allow the channel to open substantially radially in the outer edge 9. The curved portion 23 of each channel 20, 21 preferably comprises an arc of a circle of predetermined radius 24, for example, with a radius of between 50 mm and 70 mm and preferably between 60 mm and 68 mm. The curved portion 23 is advantageously an arc of a circle of 64 mm radius.

Each channel 20, 21 extends along the path from a head or inner end 25 to a tail or outer end 26. The expression "end" of the channel is intended to define the end portion of the continuous groove or channel which opens in an edge 8, 9 of the braking band or is closed by a blind end where the side walls of the groove are joined together. According to one embodiment, the inner end 25 is closed and the outer end 26 opens outside the disc, flowing into or appearing in the outer edge 9 of the braking band 7 (Figures 1 and 2).

Each channel 20, 21 forms a groove or duct which has a cross-section having lateral or side walls 27 joined to a base 28. The sides 27 of the duct are joined to the braking surface 10 (11) and, preferably, form a sharp edge similar to a cutting edge therewith. According to one embodiment, the sides 27 converge towards the joining base 28. For example, the sides 27 are inclined to one another at an angle δ of between 85 and 95 degrees and, preferably of between 88 and 92 degrees. The sides 27 are advantageously inclined to one another at an angle δ of 90 degrees. The base 28 or bottom portion of the duct constituting the channel 20, 21 is advantageously formed as an arc of a circle with a radius of between 1 mm and 3 mm and preferably 2.5 mm. According to a different embodiment, the duct constituting each of the channels 20, 21 of the pair of channels is produced by a spherical cutter so as to provide a single duct wall forming both the side walls 27 and the base 28 in a single arc of a circle of constant radius 29. The duct constituting each channel 20, 21 advantageously has a depth of between 0.3 mm and 2 mm and, preferably, between 0.5 mm and 0.9 mm. According to a further embodiment, the depth 30 of at least one channel is equal to a thickness of the braking band 7 which can wear away. In other words, it is possible for at least one of the channels 20, 21 to have a depth 30 less than that of the other channels and, in particular, a depth 30 corresponding to the maximum thickness of material of the braking band 7 which can safely be worn away or, in other words, to an amount of wear of the disc which does not yet lead to a danger of breakage thereof but is at the limit of the correct operation of the disc, taking account of any tolerance factors. Once the braking band has worn away by the specified maximum safe thickness of wear, the at least one channel will no longer be detectable relative to the braking surface 10 (11) since its base portion 28 will be aligned with the braking surface 10 (11) (Figures 2a and 2b).

The channels 20, 21 constituting a pair are advantageously separated by a distance, measured around a circle concentric with the axis of symmetry and of rotation "s" of the disc 1, which is equal to or less than a longitudinal dimension or length of the pad 12, 13 which can be associated with the disc or, in other words, a dimension of the pad, measured around a circle concentric with the axis "s" of the disc when the pad is in the working position, between the leading edge 14 and the trailing edge 15. With further advantage, the path of each channel 20, 21 has a shape substantially corresponding to that of the leading edge 14 or of the trailing edge 15 of the pad, meaning that, when the pad is associated with the braking surface and is arranged with its leading and trailing edges over or in the vicinity of the channel, the shape of the channel, throughout its path, substantially follows the leading or trailing edge of the pad (Figure 1).

According to one embodiment, at least one braking surface 10, 11 of the braking band 7 has a plurality of pairs of channels 20, 21, each pair having the characteristics specified above. At least one pair of channels 20, 21 may advantageously be provided on each of the opposed braking surfaces 10, 11 of the braking band 7 and the pairs of channels 20, 21 provided on the opposed braking surfaces 10, 11 are preferably offset relative to one another. If a plurality of pairs of channels is provided, these pairs may advantageously be distributed uniformly on the braking surface or, in other words, the pairs of channels are arranged at regular intervals on the same braking surface of an annular braking band. With further advantage, the plurality of pairs of channels 20, 21 provided on the opposed braking surfaces 10, 11 are offset relative to one another by one half interval. In other words, between two pairs of channels provided on a first braking surface 10 there is a further pair of channels on the opposite braking surface 11 of the braking band 7.

The operation of a disc for a disc brake according to the present invention during braking of a vehicle is described below.

First of all, during the rotation of the disc fixed to the wheel hub, any water present on the braking surfaces is collected by the ducts constituting the channels and is drained towards the outside of the disc by the centrifugal force produced on the water by the rotation of the disc. In particular, the oblique straight portion of each channel easily collects the water from a wide surface portion and directs it towards the outermost portions of the braking band. The water which passes along the duct constituting the channel is acted on by the centrifugal force of the disc rotating about its axis "s" and reaches the curved portion of the channel, finally reaching the outer end which is arranged radially and facilitates the expulsion of the water from the surface of the braking band, draining the braking surface completely.

When the caliper is operated, the pads are pressed against the opposed braking surfaces. Each pad is reached by each of the channels in succession.

When the pad encounters a first channel of the pair of channels, it is urged radially outwardly or inwardly relative to the disc but, before this action ceases, is affected by the passage of the reflectively symmetrical channel which urges the pad to an equal extent but in the opposite direction, returning it to its optimal working position. If the path of the channel has a shape substantially identical to that of the edge of the pad, the pad is therefore not subject to any force in a radial direction.

By virtue of the passage of the channels over the pads, the pads are dressed or restored or, in other words, a very thin surface layer of a friction material included in the pads is removed by the channels. By virtue of the action of the channels, an excellent braking action is ensured, in spite of any surface deterioration of the friction material of the pad caused, for example, by long periods of inactivity or by anomalous rises in the temperature of the pads which vitrify the friction material superficially.

It can be appreciated from the foregoing that the provision, on at least one of the braking surfaces, of at least one pair of channels which are reflectively symmetrical with respect to a radius of the disc and which extend over the entire width of the braking band which is intended to cooperate with the pads, each channel extending without a break in continuity along a path comprising at least one straight portion and at least one curved portion, solves the problem set and, in particular, achieves excellent drainage of the water present on the braking surfaces. The fact that the straight portion enables water to be collected from a wide portion of braking surface is a particular advantage.

The fact that the curved portion enables water to be expelled from the outer edge of the disc in a substantially radial direction, so that it is subjected freely to the centrifugal force produced by the rotation of the disc is an advantage.

The channels advantageously remove the surface vitrification of the friction material by scraping, by means of the edges provided between the channels and the braking surface, restoring the pads.

By virtue of the fact that the straight portion is arranged obliquely relative to the radius, but approximately radially, uniform wear is ensured along the width or radial direction of the pad, preventing local wear of the friction material and hence a non-uniform or unbalanced braking action.

The fact that the channels extend without breaks avoids intersections between several channels and hence regions of greater scraping of the friction material which lead to non-uniform wear of the pads.

The reflectively symmetrical arrangement of the pair of channels which are spaced apart by less than the length of the pad prevents the pad from having to be returned to the optimal working position exclusively by suitable resilient means and prevents vibration of the pad as it passes over the channels.

The provision of the offset channels on the two sides of the disc, that is, on the opposed braking surfaces, prevents variations in the braking torque over time. In fact, it is thus ensured that, during the rotation of the disc, at least one pad cooperates with a disc portion having channels.

A further advantage of the disc brake disc according to the invention lies in its unusual structural simplicity which enables it to be produced at a very low cost. In fact, the disc brake disc proposed can be used on both right-hand and left-hand wheels, permitting the use of a single blank and a single mould, as well as a single production line. The packaging is also simplified by the fact that it is not necessary to select right-hand discs and left-hand discs for each motor vehicle. It is also an advantage that the risk of an error due to the mounting of a left-hand disc on a right-hand wheel hub is prevented.

Naturally, variants and/or additions may be provided for the embodiments described and illustrated above.

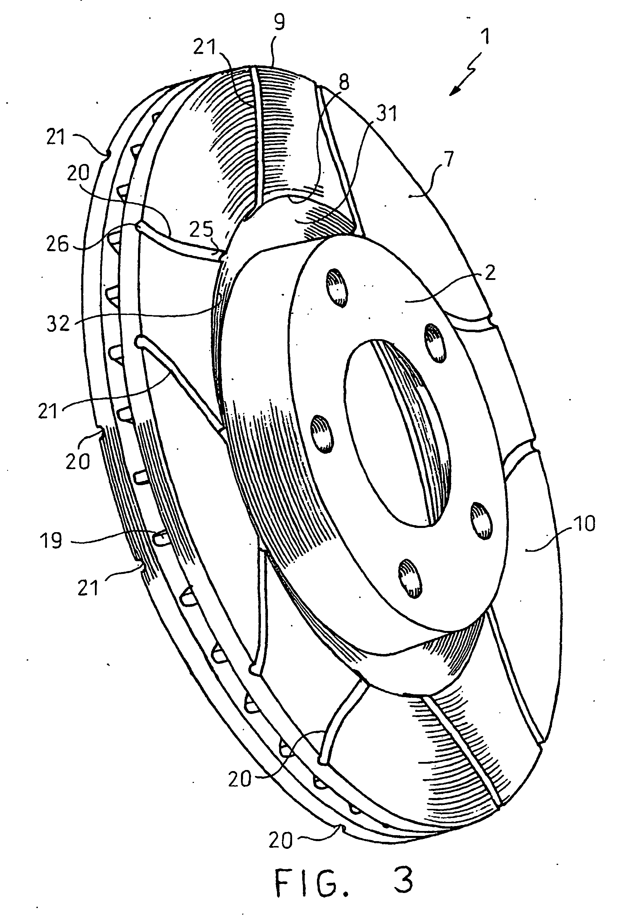

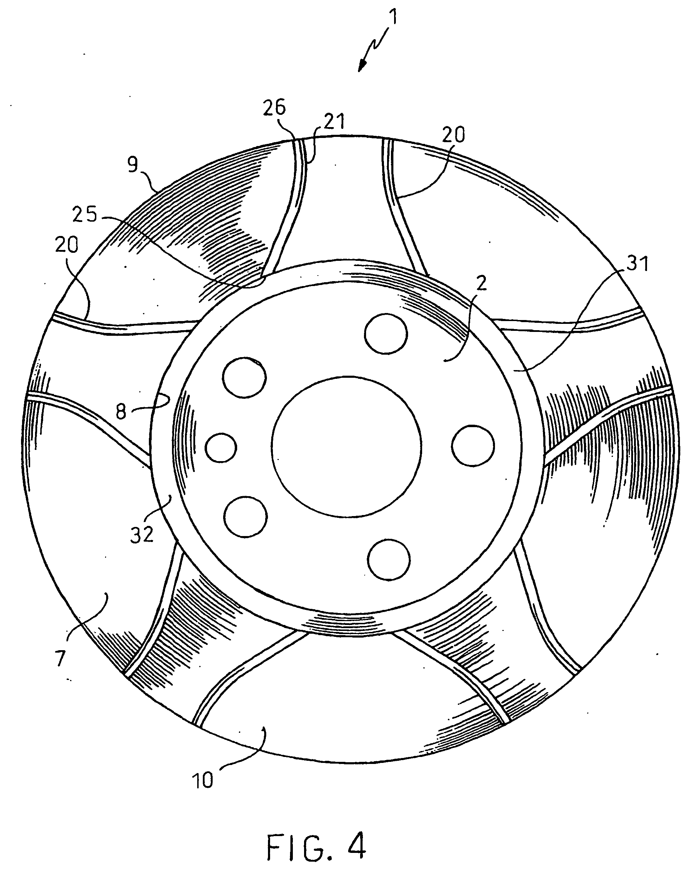

As an alternative to the embodiment shown in Figures 1 and 2, an annular groove 31 is provided at the inner edge of the surface 10 of the braking band 7 and is delimited by a joining portion 32 between the braking band 7 and the bell 2. According to this embodiment, each channel 20, 21 of the pair of channels opens towards the inside of the disc, into the joining groove, as well as towards the outside of the disc, enabling any accumulation of water present in the channel to be expelled at low speeds of rotation of the disc (Figures 3 and 4).

As an alternative to the embodiments described, each channel of the pair of channels comprises a plurality of straight portions connected to one another by curved portions. In particular, it is possible to provide a further, perfectly radial, straight portion in the vicinity of the outer edge of the braking band.

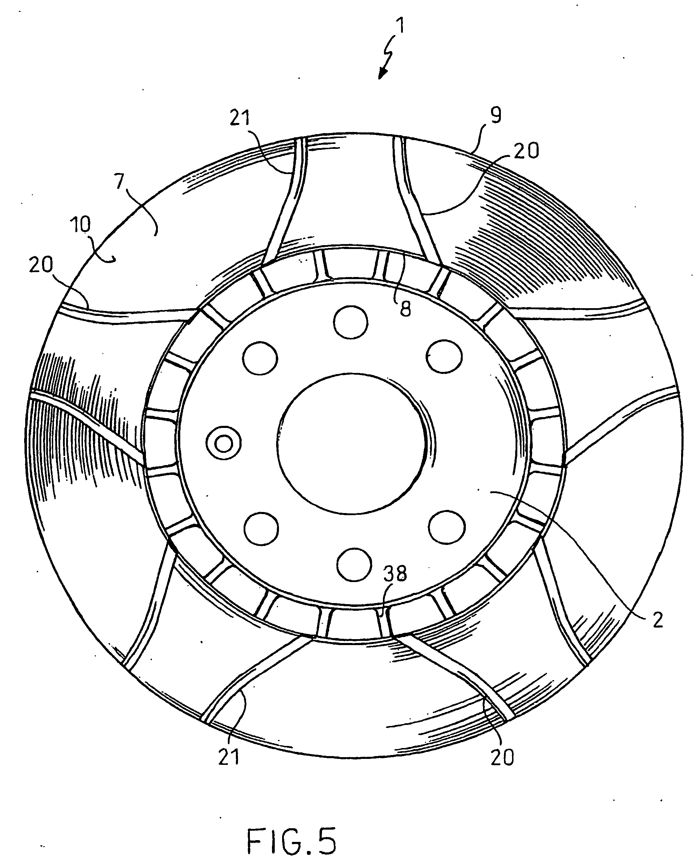

According to yet another embodiment, the braking band 7 is connected to the bell 2 by means of bridges or pins 38 which extend from the braking band 7 in order to connect it to the bell 2. In this case also, each channel 20, 21 of the pair of channels is open towards the inside of the disc as well as towards the outside of the disc, opening directly in the inner edge 8 of the braking band (Figure 5).

In order to satisfy contingent and specific requirements, an expert in the art may apply to the above-described preferred embodiment of the disc for a disc brake many modifications, adaptations and replacements of elements with other functionally equivalent elements without, however, departing from the scope of the following claims.

## Claims

1. A disc (1) for a disc brake comprising a mounting bell (2) for connection to a vehicle wheel hub and a braking band (7) connected to the bell and having opposed braking surfaces (10, 11) for cooperating with pads (12, 13) of calipers in order to exert a braking action on the vehicle, at least one of the braking surfaces having at least one pair of channels (20, 21; 20', 21') which are reflectively symmetrical with respect to a radius (R; R') of the disc and which extend so as to cover the entire width (h) of the braking band which is intended to cooperate with the pads, each channel extending without a break in continuity, each channel (20, 21; 20', 21') of the at least one pair of channels extending along a path comprising at least one straight portion (22) and at least one curved portion (23), **characterised in that** each curved portion (23) of each channel of the at least one pair of channels (20,21;20',21') is disposed in the vicinity of the outer edge (9) of the braking band (7) and is oriented substantially in a radial direction and **in that** said channels of the at least one pair of channels (20,21;20',21') do not intersect one another.

2. A disc for a disc brake according to Claim 1 in which each channel of the at least one pair of channels has an end (25) which is closed towards the inside of the disc and an opposite end (26) which is open towards the outside of the disc.

3. A disc for a disc brake according to Claim 1 in which each channel of the at least one pair of channels has an end (25) which is open towards the inside of the disc and an opposite end (26) which is open towards the outside of the disc.

4. A disc for a disc brake according to Claim 3 in which the end (25) which is open towards the inside of the disc opens into a circular groove (31) provided in a connecting portion between the braking band (7) and the bell (2).

5. A disc for a disc brake according to any one of the preceding claims in which the at least one curved portion (23) is shaped as an arc of a circle.

6. A disc for a disc brake according to any one of the preceding claims in which each channel (20, 21) of the at least one pair of channels extends along a path comprising a plurality of straight portions connected to one another by curved portions.

7. A disc (1) for a disc brake according to claim 1, said disc comprising a mounting bell (2) for connection to a vehicle wheel hub and a braking band (7) connected to the bell and having opposed braking surfaces (10, 11) for cooperating with pads (12, 13) of calipers in order to exert a braking action on the vehicle, at least one of the braking surfaces having at least one pair of channels (20, 21; 20', 21') which are reflectively symmetrical with respect to a radius (R; R') of the disc and which extend so as to cover the entire width (h) of the braking band which is intended to cooperate with the pads, each channel extending without a break in continuity, each channel (20, 21; 20', 21') of the at least one pair of channels extending along a path comprising at least one straight portion (22) and at least one curved portion (23), wherein each channel extends along the path from a head, or inner end (25), to a tail, or outer end (26), said end being closed by a blind end where side walls of the channel are joined together.

8. A disc for a disc brake according to any one of the preceding claims in which each channel (20, 21; 20', 21') of the at least one pair of channels comprises a straight portion (22) which is disposed in a portion of the braking band nearest to the bell and which is arranged obliquely relative to the disc radius (R; R') with respect to which the pair of channels is reflectively symmetrical.

9. A disc for a disc brake according to Claim 8 in which the oblique straight portions (22) of the channels of the at least one pair of channels diverge or converge.

10. A disc for a disc brake according to Claim 9 in which the oblique straight portions (22) of the same pair of channels (20, 21) subtend an angle (α) of between 80 degrees and 130 degrees, preferably of between 106 degrees and 120 degrees.

11. A disc for a disc brake according to Claim 9 in which the oblique straight portions (22) of the same pair of channels (20, 21) subtend an angle (α) of 112 degrees.

12. A disc for a disc brake according to any one of the preceding claims in which a distance between the channels of the same pair, measured along a circle concentric with an axis of rotation (s) of the disc, is equal to or less than a length of the pad which can be associated with the disc.

13. A disc for a disc brake according to any one of the preceding claims, in which each channel has a path having a shape substantially corresponding to that of a side edge (14; 15) of the pad which can be associated therewith.

14. A disc for a disc brake according to any one of the preceding claims in which at least one pair of channels is provided in each of the opposed braking surfaces (10, 11).

15. A disc for a disc brake according to Claim 14 in which the at least one pair of channels provided in the braking surface (10) is offset relative to the at least one pair of channels provided in the opposite braking surface (11).

16. A disc for a disc brake according to any one of the preceding claims in which the braking band has a plurality of pairs of channels distributed uniformly, that is, at regular intervals, on the same braking surface.

17. A disc for a disc brake according to Claim 16 in which the plurality of pairs of channels provided in the opposed braking surfaces are offset relative to one another by one half interval.

18. A disc for a disc brake according to any one of the preceding claims, in which each channel has a cross-section having sides (27) converging towards a joining base (28).

19. A disc for a disc brake according to Claim 18 in which the sides (27) constitute cutting edges for restoring the pad which can be associated therewith.

20. A disc for a disc brake according to Claim 18 or Claim 19 in which the sides (27) are inclined to one another at an angle (δ) of between 85 degrees and 95 degrees, preferably between 88 degrees and 92 degrees.

21. A disc for a disc brake according to Claim 20, in which the sides (27) are inclined to one another at an angle (δ) of 90 degrees.

22. A disc for a disc brake according to any one of Claims 19, 20 and 21, in which the base (28) is shaped as an arc of a circle.

23. A disc for a disc brake according to Claim 22, in which the base is shaped as an arc of a circle with a radius (29) of between 1 mm and 3 mm and preferably 2.5 mm.

24. A disc for a disc brake according to any one of Claims 1 to 19 in which each channel has a cross-section shaped entirely as an arc of a circle.

25. A disc for a disc brake according to any one of the preceding claims, in which each channel has a depth of between 0.3 mm and 2 mm and preferably between 0.5 mm and 0.9 mm.

26. A disc for a disc brake according to any one of the preceding claims, in which at least one channel has a depth equal to that thickness of the braking band (8) of the disc which can wear away.

27. A disc for a disc brake according to any one of the preceding claims, in which the braking band of the disc has a pair of plates (16, 17) between which ducts for the ventilation of the disc are formed.

## Patentansprüche

1. Scheibe (1) für eine Scheibenbremse, umfassend eine Befestigungsglocke (2) zur Verbindung mit einer Fahrzeugradnabe und ein Bremsband (7), das mit der Glocke verbunden ist und gegenüberliegende Bremsflächen (10, 11) zur Zusammenwirkung mit Belägen (12, 13) von Bremszangen aufweist, um eine Bremswirkung auf das Fahrzeug auszuüben, wobei zumindest eine der Bremsflächen zumindest ein Paar von Kanälen (20, 21; 20', 21') aufweist, die in Bezug auf einen Radius (R; R') der Scheibe spiegelbildlich symmetrisch sind und sich so erstrecken, dass sie die gesamte Breite (h) des Bremsbands, das mit den Belägen zusammenwirken soll, abdecken, wobei sich jeder Kanal ohne eine Unterbrechung im Verlauf erstreckt, wobei sich jeder Kanal (20, 21; 20', 21') des zumindest einen Paars von Kanälen entlang eines Pfads erstreckt, der zumindest einen geraden Abschnitt (22) und zumindest einen gekrümmten Abschnitt (23) umfasst, **dadurch gekennzeichnet, dass** jeder gekrümmte Abschnitt (23) jedes Kanals des zumindest einen Paars von Kanälen (20, 21;, 20', 21') in der Nähe des äußeren Rands (9) des Bremsbands (7) angeordnet ist und im Wesentlichen in einer radialen Richtung ausgerichtet ist, und dass die Kanäle des zumindest einen Paars von Kanälen (20, 21; 20', 21') einander nicht schneiden.

2. Scheibe für eine Scheibenbremse gemäß Anspruch 1, wobei jeder Kanal des zumindest einen Paars von Kanälen ein Ende (25) aufweist, das zur Innenseite der Scheibe hin geschlossen ist, und ein entgegengesetztes Ende (26) aufweist, das zur Außenseite der Scheibe hin offen ist.

3. Scheibe für eine Scheibenbremse gemäß Anspruch 1, wobei jeder Kanal des zumindest einen Paars von Kanälen ein Ende (25) aufweist, das zur Innenseite der Scheibe hin offen ist, und ein entgegengesetztes Ende (26) aufweist, das zur Außenseite der Scheibe hin offen ist.

4. Scheibe für eine Scheibenbremse gemäß Anspruch 3, wobei sich das Ende (25), das zur Innenseite der Scheibe hin offen ist, in eine kreisförmige Rille (31) öffnet, die in einem verbindenden Abschnitt zwischen dem Bremsband (7) und der Glocke (2) bereitgestellt ist.

5. Scheibe für eine Scheibenbremse gemäß einem der vorhergehenden Ansprüche, wobei der zumindest eine gekrümmte Abschnitt (23) als ein Kreisbogen geformt ist.

6. Scheibe für eine Scheibenbremse gemäß einem der vorhergehenden Ansprüche, wobei sich jeder Kanal (20, 21) des zumindest einen Paars von Kanälen entlang eines Pfads erstreckt, der mehrere gerade Abschnitte umfasst, die durch gekrümmte Abschnitte miteinander verbunden sind.

7. Scheibe (1) für eine Scheibenbremse gemäß Anspruch 1, wobei die Scheibe eine Befestigungsglocke (2) zur Verbindung mit einer Fahrzeugradnabe und ein Bremsband (7) umfasst, das mit der Glocke verbunden ist und gegenüberliegende Bremsflächen (10, 11) zur Zusammenwirkung mit Belägen (12, 13) von Bremszangen aufweist, um eine Bremswirkung auf das Fahrzeug auszuüben, wobei zumindest eine der Bremsflächen zumindest ein Paar von Kanälen (20, 21; 20', 21') aufweist, die in Bezug auf einen Radius (R; R') der Scheibe spiegelbildlich symmetrisch sind und sich so erstrecken, dass sie die gesamte Breite (h) des Bremsbands, das mit den Belägen zusammenwirken soll, abdecken, wobei sich jeder Kanal ohne eine Unterbrechung im Verlauf erstreckt, wobei sich jeder Kanal (20, 21; 20', 21') des zumindest einen Paars von Kanälen entlang eines Pfads erstreckt, der zumindest einen geraden Abschnitt (22) und zumindest einen gekrümmten Abschnitt (23) umfasst, wobei sich jeder Kanal entlang eines Pfads von einem Kopf- oder inneren Ende (25) zu einem Schwanz- oder äußeren Ende (26) erstreckt, wobei dieses Ende durch ein blindes Ende verschlossen ist, wo Seitenwände des Kanals miteinander verbunden sind.

8. Scheibe für eine Scheibenbremse gemäß einem der vorhergehenden Ansprüche, wobei jeder Kanal (20, 21; 20', 21') des zumindest einen Paars von Kanälen einen geraden Abschnitt (22) umfasst, der in einem Abschnitt des Bremsbands angeordnet ist, welcher sich am -nächsten zur Glocke befindet, und der in Bezug auf den Scheibenradius (R; R'), in Bezug auf den das Paar von Kanälen spiegelbildlich symmetrisch ist, schräg angeordnet ist.

9. Scheibe für eine Schreibenbremse gemäß Anspruch 8, wobei die schrägen geraden Abschnitte (22) der Kanäle des zumindest einen Paars von Kanälen auseinanderlaufen oder zusammenlaufen.

10. Scheibe für eine Scheibenbremse gemäß Anspruch 9, wobei die schrägen geraden Abschnitte (22) des gleichen Paars von Kanälen (20, 21) einen Winkel (α) von zwischen 80 Grad und 130 Grad, vorzugsweise zwischen 106 Grad und 120 Grad, einschließen.

11. Scheibe für eine Scheibenbremse gemäß Anspruch 9, wobei die schrägen geraden Abschnitte (22) des gleichen Paars von Kanälen (20, 21) einen Winkel (α) von 112 Grad einschließen.

12. Scheibe für eine Scheibenbremse gemäß einem der vorhergehenden Ansprüche, wobei eine Entfernung zwischen den Kanälen des gleichen Paars, die entlang eines mit der Drehachse (s) der Scheibe konzentrischen Kreises gemessen wird, gleich wie oder weniger als eine Länge des Belags ist, der der Scheibe zugeordnet werden kann.

13. Scheibe für eine Scheibenbremse gemäß einem der vorhergehenden Ansprüche, wobei jeder Kanal einen Pfad aufweist, der eine Form aufweist, die im Wesentlichen jener einer Seitenkante (14; 15) des Belags entspricht, der der Scheibe zugeordnet werden kann.

14. Scheibe für eine Scheibenbremse gemäß einem der vorhergehenden Ansprüche, wobei in jeder der gegenüberliegenden Bremsflächen (10, 11) zumindest ein Paar von Kanälen bereitgestellt ist.

15. Scheibe für eine Scheibenbremse gemäß Anspruch 14, wobei das zumindest eine Paar von Kanälen, das in der Bremsfläche (10) bereitgestellt ist, in Bezug auf das zumindest eine Paar von Kanälen, das in der gegenüberliegenden Bremsfläche (11) bereitgestellt ist, versetzt ist.

16. Scheibe für eine Scheibenbremse gemäß einem der vorhergehenden Ansprüche, wobei das Bremsband eine Mehrzahl Paare von Kanälen aufweist, die gleichförmig, das heißt, in regelmäßigen Intervallen, auf der gleichen Bremsfläche verteilt sind.

17. Scheibe für eine Scheibenbremse gemäß Anspruch 16, wobei die Mehrzahl Paare von Kanälen, die in den gegenüberliegenden Bremsflächen bereitgestellt sind, in Bezug zueinander um ein halbes Intervall versetzt sind.

18. Scheibe für eine Schreibenbremse gemäß einem der vorhergehenden Ansprüche, wobei jeder Kanal einen Querschnitt aufweist, der Seiten (27) aufweist, die zu einer verbindenden Basis (28) hin zusammenlaufen.

19. Scheibe für eine Scheibenbremse gemäß Anspruch 18, wobei die Seiten (27) Schneidkanten zum Wiederherstellen des zuordenbaren Belags bilden.

20. Scheibe für eine Scheibenbremse gemäß Anspruch 18 oder Anspruch 19, wobei die Seiten (27) in einem Winkel (δ) von zwischen 85 Grad und 95 Grad, vorzugsweise zwischen 88 Grad und 92 Grad, zueinander geneigt sind.

21. Scheibe für eine Scheibenbremse gemäß Anspruch 20, wobei die Seiten (27) in einem Winkel (δ) von 90 Grad zueinander geneigt sind.

22. Scheibe für eine Scheibenbremse gemäß einem der Ansprüche 19, 20 und 21, wobei die Basis (28) als ein Kreisbogen geformt ist.

23. Scheibe für eine Scheibenbremse gemäß Anspruch 22, wobei die Basis als ein Kreisbogen mit einem Radius (29) von zwischen 1 mm und 3 mm und vorzugsweise 2,5 mm geformt ist.

24. Scheibe für eine Scheibenbremse gemäß einem der Ansprüche 1 bis 19, wobei jeder Kanal einen Querschnitt aufweist, der zur Gänze als ein Kreisbogen geformt ist.

25. Scheibe für eine Scheibenbremse gemäß einem der vorhergehenden Ansprüche, wobei jeder Kanal eine Tiefe von zwischen 0,3 mm und 2 mm und vorzugsweise zwischen 0,5 mm und 0,9 mm aufweist.

26. Scheibe für eine Scheibenbremse gemäß einem der vorhergehenden Ansprüche, wobei zumindest ein Kanal eine Tiefe aufweist, die jener Dicke des Bremsbands (8) gleich ist, um welche sich die Scheibe abnutzen kann.

27. Scheibe für eine Scheibenbremse gemäß einem der vorhergehenden Ansprüche, wobei das Bremsband der Scheibe ein Paar von Platten (16, 17) aufweist, zwischen denen Durchgänge für die Lüftung der Scheibe gebildet sind.

## Revendications

1. Disque (1) pour un frein à disque comprenant une cloche de montage (2) pour le raccordement à un moyeu de roue de véhicule et une bande de freinage (7) raccordée à la cloche et possédant des surfaces de freinage opposées (10, 11) destinée à coopérer avec des plaquettes (12, 13) d'étriers pour appliquer une action de freinage au véhicule, au moins l'une des surfaces de freinage possédant au moins une paire de canaux (20, 21; 20', 21'), qui sont symétriques par réflexion par rapport à un rayon (R; R') du disque et qui s'étendent de manière à couvrir toute la largeur (h) de la bande de freinage, qui est destinée à coopérer avec les plaquettes, chaque canal s'étendant sans interruption de continuité, chaque canal (20, 21; 20', 21') de la au moins une paire de canaux s'étendant le long d'un trajet comprenant au moins une partie rectiligne (22) et au moins une partie courbe (23), **caractérisé en ce que** chaque partie courbe (23) de chaque canal de la au moins une paire de canaux (20, 21; 20', 21') est disposée au voisinage du bord extérieur (9) de la bande de freinage (7) et est orientée sensiblement dans une direction radiale et **en ce que** lesdits canaux de la au moins une paire de canaux (20, 21; 20', 21') ne se croisent pas l'un l'autre.

2. Disque pour un frein à disque selon la revendication 1, dans lequel chaque canal de la au moins une paire de canaux comporte une extrémité (25) qui est fermée en direction de l'intérieur du disque et une extrémité opposée (26) qui est ouverte en direction de l'extérieur du disque.

3. Disque pour un frein à disque selon la revendication 1, dans lequel chaque canal de la au moins une paire de canaux possède une extrémité (25), qui est ouverte en direction de l'intérieur du disque, et une extrémité opposée (26), qui est ouverte en direction de l'extérieur du disque.

4. Disque pour un frein à disque selon la revendication 3, dans lequel l'extrémité (25), qui est ouverte en direction de l'intérieur du disque, débouche dans une gorge circulaire (31) prévue dans une partie de raccordement entre la bande de freinage (7) et la cloche (2).

5. Disque pour un frein à disque selon l'une quelconque des revendications précédentes, dans lequel la au moins une partie courbe (23) est formée en arc de cercle.

6. Disque pour un frein à disque selon l'une quelconque des revendications précédentes, dans lequel chaque canal (20, 21) de la au moins une paire de canaux s'étend le long d'un trajet comportant une pluralité de parties rectilignes raccordées entre elles par des parties courbes.

7. Disque (1) pour un frein à disque selon la revendication 1, ledit disque comprenant une cloche de montage (2) destinée à être raccordée à un moyeu de roue de véhicule et une bande de freinage (7) raccordée à la cloche et comportant des surfaces de freinage opposées (10, 11) destinées à coopérer avec des plaquettes (12, 13) d'étriers de manière à appliquer une action de freinage au véhicule, au moins l'une des surfaces de freinage comportant au moins une paire de canaux (20, 21; 20', 21'), qui sont symétriques par réflexion par rapport à un rayon (R; R') du disque et s'étendent de manière à couvrir toute la largeur (h) de la bande de freinage, qui est destinée à coopérer avec les plaquettes, chaque canal s'étendant sans interruption de continuité, chaque canal (20, 21; 20', 21') de la au moins une paire de canaux s'étendant le long d'un trajet comprenant au moins une partie rectiligne (22) et au moins une partie courbe (23), dans lequel chaque canal s'étend le long du trajet depuis une tête ou une extrémité intérieure (25) jusqu'à une queue ou extrémité extérieure (26), ladite extrémité étant fermée par une extrémité aveugle, où des parois latérales du canal sont réunies entre elles.

8. Disque pour un frein à disque selon l'une quelconque des revendications précédentes, dans lequel chaque canal (20, 21; 20', 21') de la au moins une paire de canaux comprend une partie rectiligne (22), qui est disposée dans une partie de la bande de freinage la plus proche de la cloche et qui est disposée obliquement par rapport au rayon (R; R') du disque, par rapport auquel la paire de canaux est symétrique par réflexion.

9. Disque pour un frein à disque selon la revendication 8, dans lequel les parties rectilignes obliques (22) des canaux de la au moins une paire de canaux divergent ou convergent.

10. Disque pour un frein à disque selon la revendication 9, dans lequel les parties rectilignes obliques (22) de la même paire de canaux (20, 21) sous-tendent un angle (α) entre 80 degrés et 130 degrés, de préférence entre 106 degrés et 120 degrés.

11. Disque pour un frein à disque selon la revendication 9, dans lequel les parties rectilignes obliques (22) de la même paire de canaux (20, 21) sous-tendent un angle α de 112 degrés.

12. Disque pour un frein à disque selon l'une quelconque des revendications précédentes, dans lequel une distance entre les canaux de la même paire, mesurée le long d'un cercle concentrique avec un axe de rotation (s) du disque, est égale ou inférieure à une longueur de la plaquette, qui peut être associée au disque.

13. Disque pour un frein à disque selon l'une quelconque des revendications précédentes, dans lequel chaque canal possède un trajet possédant une forme correspondant sensiblement à celle d'un bord latéral (14, 15) de la plaquette qui peut lui être associée.

14. Disque pour un frein à disque selon l'une quelconque des revendications précédentes, dans lequel au moins une paire de canaux est prévue dans chacune des surfaces de freinage opposées (10, 11).

15. Disque pour un frein à disque selon la revendication 14, dans lequel la au moins une paire de canaux prévus dans la surface de freinage (10) est décalée par rapport à la au moins une paire de canaux prévus dans la surface de freinage opposée (11).

16. Disque pour un frein à disque selon l'une quelconque des revendications précédentes, dans lequel la bande de freinage possède une pluralité de paires de canaux répartis de façon uniforme, c'est-à-dire à des intervalles réguliers, sur la même surface de freinage.

17. Disque pour un frein à disque selon la revendication 16, dans lequel la pluralité de paires de canaux prévus dans les surfaces de freinage opposées sont décalées les unes par rapport aux autres d'un demi-intervalle.

18. Disque pour un frein à disque selon l'une quelconque des revendications précédentes, dans lequel chaque canal possède une section en coupe transversale comportant des côtés (27) qui convergent vers une base de jonction (28).

19. Disque pour un frein à disque selon la revendication 18, dans lequel les côtés (27) constituent des bords de coupe pour restaurer la plaquette qui peut être associée au disque.

20. Disque pour un frein à disque selon la revendication 18 ou la revendication 19, dans lequel les côtés (27) sont inclinés l'un par rapport à l'autre sous un angle (δ) compris entre 85 degrés et 95 degrés, de préférence entre 88 degrés et 92 degrés.

21. Disque pour un frein à disque selon la revendication 20, dans lequel les côtés (27) sont inclinés l'un par rapport à l'autre sous un angle (δ) de 90 degrés.

22. Disque pour un frein à disque selon l'une quelconque des revendications 19, 20 et 21, dans lequel la base (28) est formée en arc de cercle.

23. Disque pour un frein à disque selon la revendication 22, dans lequel la base est formée en arc de cercle avec un rayon (29) compris entre 1 mm et 3 mm et de préférence égal à 2,5 mm.

24. Disque pour un frein à disque selon l'une quelconque des revendications 1 à 19, dans lequel chaque canal comporte une section transversale formée entièrement en arc de cercle.

25. Disque pour un frein à disque selon l'une quelconque des revendications précédentes, dans lequel chaque canal possède une profondeur comprise entre 0,3 mm et 2 mm et de préférence entre 0,5 mm et 0,9 mm.

26. Disque pour un frein à disque selon l'une quelconque des revendications précédentes, dans lequel au moins un canal possède une profondeur égale à l'épaisseur de la bande de freinage (8) du disque qui peut s'user.

27. Disque pour un frein à disque selon l'une quelconque des revendications précédentes, dans lequel la bande de freinage du disque possède une paire de plaques (16, 17), entre lesquelles sont formés des conduits pour la ventilation du disque.
